# EUROPÄISCHE PATENTSCHRIFT

(11) **EP 2 780 403 B1**
(45) Veröffentlichungstag und Bekanntmachung des Hinweises auf die Patenterteilung: **14.11.2018**
(21) Anmeldenummer: 12797760.1
(22) Anmeldetag: 14.11.2012
(51) Int. Cl.: C08J 5/12, E04F 15/02, C09J 5/00, E04F 13/077, E04F 15/10, E04C 2/20, E04C 2/24, E04C 2/38

(54) **PANEEL MIT KANTENBRECHUNG**
PANEL HAVING A BEVEL
PANNEAU À ARÊTE ABATTUE

(30) Priorität: 15.11.2011 DE 202011107844 U
(43) Veröffentlichungstag der Anmeldung: 24.09.2014
(73) Patentinhaber: Akzenta Paneele + Profile GmbH, 56759 Kaisersesch (DE)
(72) Erfinder: HANNIG, Hans-Jürgen, 51427 Bergisch Gladbach (DE)
(74) Vertreter: Michalski Hüttermann & Partner Patentanwälte mbB
(86) Internationale Anmeldenummer: PCT/EP2012/072582
(87) Internationale Veröffentlichungsnummer: WO 2013/072349

(56) Entgegenhaltungen:
- EP-A2- 1 683 929
- WO-A1-01/96688
- WO-A2-01/53067
- DE-A1- 1 719 095

## Beschreibung

Die Erfindung betrifft ein Paneel zum Belegen von Fußböden, Wänden, Decken u. dgl. mit einer Trägerschicht und ggf. mindestens einer Deckschicht aus einem Kunststoff wie Acrylharz, PVC, PU, PC PP, PPE, PMMA usw.

Solche Paneele sind im Allgemeinen bekannt. Beispielsweise beschreibt die EP 1634696 B1 ein Bodenbelagelement mit einer Trägerplatte aus einem druckfesten Holzwerkstoff und einer Deckschicht aus geschäumtem Polyvinylchlorid, das einen geschäumten Kern enthält, der zwischen Vinyl-Lagen angeordnet ist.

Die Anbringung einer Fase an mindestens zwei gegenüberliegenden Seiten eines Paneels ist für Dekorpaneele mit Holzwerkstoffkern bekannt aus WO 01/96688 A1. Hier dient die Fase dazu, Beschädigungen der Dekorschicht beim Einbau zu vermeiden, wenn sich die Kanten bei Verschwenken der Paneele mit Druck berühren. Um die Unterbrechung der Dekorschicht zu kaschieren, wird der Bereich dieser Kantenbrechung bedruckt.

In der EP 1512809 A1 wird beansprucht, die Wände der Ausnehmung bzw. Kantenbrechung mit einer feuchtigkeitsabweisenden Schicht zu versehen. Dadurch soll das schädliche Eindringen von Feuchtigkeit in das Material des Trägers aus Holzwerkstoff verhindert werden. Die Schicht kann aus einem Lack, einer Farbe oder einem flexiblen und elastischen Material gebildet und so dick ausgeführt werden, dass beim Verbinden zweier Paneele durch Zusammenpressen der Lackaufträge eine Abdichtung der Fuge erfolgt.

Das deutsche Gebrauchsmuster DE 202008011589 U1 offenbart ein Paneel aus einem biegeweichen und elastischen Kunststoff als Träger mit einer Dekorschicht und mit komplementären Verriegelungsmitteln, welche die Herstellung einer zusammenhängenden Belagfläche ermöglichen. Um die unvermeidlich unterschiedlichen Spalten zwischen den einzelnen Paneelen zu kaschieren und den ästhetischen Eindruck zu verbessern, ist eine Fase oder Kantenbrechung an mindestens einer Paneelkante vorgesehen.

EP 1382774 A1 beschreibt ein Paneel aus einem Holzwerkstoff und einer Dekorschicht mit einem Dekorpapier oder Furnier. Dabei ist eine Fase vorgesehen, welche das Aussehen eines klassischen Parketts erzielen soll und mit einer Zusatzbeschichtung aus einem Lack oder einem Klebeband versehen sein kann.
Bei der Anwendung der bekannten Technik der Kantenbrechung auf Paneele mit einer Träger- und/oder Deckschicht aus Kunststoff treten jedoch Schwierigkeiten auf. Insbesondere wenn der Träger eine gewisse Flexibilität aufweist, oder wenn die Deckschicht nachgiebig ist, was sowohl für die Verlegung als auch bei der Benutzung - vorteilhaft ist, kann sich die Beschichtung der Ausnehmung leicht lösen, weil sie nur aus einem schmalen Streifen besteht und sowohl an der Deckschicht als auch an der Trägerschicht haften muss, wenn die Fase bzw. Ausnehmung bis in diese hineinreicht. Diese Gefahr besteht insbesondere dann, wenn die Beschichtungen benachbarter Paneele beim Einbau zusammengedrückt werden. Übliche Lacke zeigen an Kunststoffflächen nur unzureichende Haftung.
WO 01/53067 A2 offenbart eine Bodenbedeckungssystem, bei dem zwei oder mehrere Kunststoffpaneele durch ein Haftmittel aneinander geklebt werden, wobei das Haftmittel eine Lösungsmittel enthält und auf mindestens eine Kante mindestens eines Bretts und / oder auf einem Verbindungsstück, wie z.B. einem Keil, aufgetragen wird.
DE 17 19 095 A offenbart die Verwendung eines flüssigen Quellmittels, gegebenenfalls mit anderen Zusätzen, für PVC in Sprühvorrichtungen als Mittel zum Verbinden von PVC- Teilen.
WO 01/96688 A1 offenbart einen Fußbodenbelag, bestehend aus harten Paneelen, wobei diese Paneele zumindest an zwei gegenüberliegenden mit Kanten versehen sind,
mit einstückig mit den Platten hergestellten Kupplungsmitteln, so dass mehrere solcher Paneele miteinander verbunden werden können, wobei diese Kupplungsmittel ein Verriegelung in einer Richtung senkrecht zur Ebene des Fußbodenbelags als auch in einer Richtung senkrecht zu den Kanten und parallel zu der Ebene des Fußbodenbelags sicherstellen, wobei die Kanten eine Fase aufweisen.
Es ist daher Aufgabe der Erfindung, ein Paneel mit einer Deckschicht aus Kunststoff anzugeben bei sich dem die Beschichtung der Kantenausnehmung beim Einbau und auch bei langem Gebrauch nicht löst. Darüber hinaus ist es die Aufgabe der Erfindung ein Verfahren zur Herstellung eines entsprechenden Paneels anzugeben. Die Aufgabe wird hinsichtlich des Paneels durch ein Paneel nach dem Hauptanspruch gelöst.

Die erfindungsgemäßen Paneele können aus Kunststoff bestehen. Insbesondere kommen als Kunststoffe Thermoplaste wie Acrylharze, Polymethylmethacrylat, Polyvinylchlorid (PVC), Polyurethane (PU), Polycarbonate (PC), Polypropylen (PP), Polyphenylether (PPE), Polyamide (PA), Polystyrol (PS) sowie Copolymere der diesen zugrundeliegenden Monomeren und Gemische in Betracht. Darüber hinaus kann als Kunststoff ein Terpolymer wie beispielsweise Acrylnitril-Butadien-Styrol-Copolymerisat (ABS) eingesetzt werden.

Die erfindungsgemäßen Paneele umfassen mindestens eine Trägerschicht und auf mindestens einer Seite eine Deckschicht aus Kunststoff.
Es wurde nämlich überraschenderweise gefunden, dass es möglich ist; durch Bestandteile, welche die Haftung der Beschichtung im Bereich der Kantenbrechung am Kunststoff der Deckschicht fördern, auch die Haftung an den weiteren von der Kantenbrechung erfassten Schichten soweit zu verbessern, dass die erwähnten Probleme nicht mehr auftreten.

Die Kantenbrechung kann beispielsweise eine Fase (Abschrägung), eine Abrundung oder ein treppenförmiger Falz sein. Ihre Breite richtet sich unter anderem nach der Dicke des Paneels und liegt bevorzugt zwischen 0,5 und 5 mm.

Die Trägerschicht beim erfindungsgemäßen Paneel kann aus vielerlei Materialen aufgebaut sein, darunter Holzwerkstoffe wie HDF-, OSB und MDF-Platten, Spanplatten, aber auch Kunststoffe wie Thermoplaste oder unvernetzte oder vernetzte Elastomere sowie Duromere oder Mischungen aus solchen Polymeren. Dies können neben Polyvinylchlorid auch Polyolefine (beispielsweise Polyethylen, Polypropylen), Polyamide, Polyurethane, Polystyrol sein. Ebenfalls brauchbar sind Papier, Pappe, aber auch Platten aus Mineralien wie natürliche und künstliche Steinplatten, Betonplatten, Gipsfaserplatten, so genannte WPC-Platten (aus einem Gemisch von Kunststoff und Holz), sowie Platten aus natürlichen Rohstoffen wie Kork und Holz. Auch Platten aus Biomasse wie Stroh, Maisstroh, Bambus, Laub, Algenextrakte, Hanf, Ölpalmenfasern, können verwendet werden. Des Weiteren sind Recyclingwerkstoffe aus den genannten Materialien brauchbar. Die Trägerschicht kann auch mehrere der genannten Materialien im Gemisch oder als Schichtverbund umfassen. Beispiele sind Gipskarton- oder Holz-Kunststoff-Schichtplatten.

Das Plattenträgermaterial kann - je nach den gewünschten physikalischen Eigenschaften des fertigen Paneels - massiv dicht sein oder mehr oder weniger große Hohlräume aufweisen, z.B. aufgeschäumt sein oder Hohlräume aufweisen, deren Größe in der Größenordnung der Plattenabmessungen liegt.

Kunststoffe für die Deckschicht sind bevorzugt Thermoplaste wie Polyvinylchlorid, Polyolefine (beispielsweise Polyethylen, Polypropylen), Polyamide, Polyurethane, Polystyrol sein. Diese Schichten können als vorgefertigter Film auf die Trägerschicht laminiert werden oder in situ, z.B. aus einer Schmelze oder einer Lösung, erzeugt werden. Das Laminieren kann mit Hilfe eines Klebers erfolgen, der mit Blick auf die zu verbindenden Materialien auszuwählen ist. Die erfindungsgemäß verwendeten Klebstoffe sind bevorzugt physikalisch und chemisch abbindende Klebstoffe, insbesondere auf der Basis von Polyurethanen. Ebenfalls geeignet sind reaktive Schmelzklebstoffe. Diese werden im geschmolzenen Zustand mit Temperaturen von beispielsweise 110 bis 200°C, bevorzugt bis 130 °C, auf die Oberfläche des Trägers oder auf eine Fläche der Deckschicht aufgetragen. Unmittelbar nach dem Auftragen wird die Deckschicht auf die Oberfläche des Trägers aufgelegt, wobei die Verklebung des Vliesstoffs mit dem Träger durch Abkühlen und Verfestigen des Schmelzklebers erfolgt. Geeignete Schmelzklebstoffe enthalten Polyurethane« Solche reaktive Schmelzklebstoffe sind beispielsweise in EP777695B2 beschrieben. Grundsätzlich verwendbar sind auch Reaktionsklebstoffe mit zwei Komponenten oder auch einfache Schmelzklebstoffe (Hotmelts). Weiterhin eignen sich kalt abbindende Einkomponenten-Klebstoffe sowie Dispersionskleber (Weißleim).

Es ist auch möglich, vor oder nach dem Verbinden mit der Trägerschicht die freie Oberfläche der Deckschicht besonders widerstandsfähig gegen Verschleiß zu machen, beispielsweise durch Elektronenstrahlvernetzung. Geeignete elektronenstrahlgehärtete Folien sind als sog. ESH-Folien im Handel. Die Deckschicht kann auch abriebhemmende Zusätze wie Korund, Borcarbid o. ä. enthalten.

Die Kunststoffe der Deckschicht können übliche Füllstoffe enthalten, beispielsweise Kalziumcarbonat (Kreide), Aluminiumoxid, Kieselgel, Quarzmehl, Holzmehl, Gips. Auch können sie in bekannter Weise eingefärbt sein. Als Material für die Deckschicht sind auch rezyklierte Kunststoffe, insbesondere Thermoplaste, verwendbar. Sowohl die Trägerschicht als auch die Deckschicht kann durch Einlagen aus Fasern, beispielsweise aus Glas, Aramid oder anderen hochfesten Kunststoffen, Kohlenstoff, stabilisiert sein.

Die Deckschicht kann auch Gasbläschen umfassen, die beispielsweise 10 bis 50 % des Gesamtvolumens der Schicht ausmachen können und sich in bekannter Weise durch Zugabe eines Blähmittels bei der Herstellung der Schicht erzeugen lassen.

Die Dicke der Deckschicht liegt im Allgemeinen zwischen 0,1 und 10 mm. Bevorzugt ist ein Bereich von 0,1 bis 5 mm, besonders bevorzugt von 0,2 bis 2 mm.

Insbesondere, aber nicht ausschließlich, wenn die Deckschicht als vorgefertigter Film auf die Trägerschicht laminiert wird, kann sie in Form eines mehrschichtigen Komposits verwendet werden.

Die Deckschicht des erfindungsgemäßen Paneels kann beispielsweise dekoriert sein, indem sie vor der Verbindung mit der Trägerschicht speziell eingefärbt oder mit einem Muster versehen, beispielsweise bedruckt wurde. Wenn das aufgedruckte Muster auf der Trägerschicht liegt, wird es durch die Folie vor Abnutzung geschützt. In diesem Fall muss die Deckschicht transparent sein. Des Weiteren kann in die Oberfläche der Deckschicht ein Relief eingeprägt sein, das mit einem ggf. vorhandenen Dekor in räumlicher Beziehung stehen kann, um beispielsweise einen Naturstoff wie Holz oder Stein, nachzubilden. Die Prägung kann auf bekannte Weise mit Walzen oder Pressblechen vorgenommen werden. Es ist auch möglich, das Dekor in einer ersten Deckschicht und die Prägung, ggf. mit einem Abriebschutz, in einer darüber liegenden zweiten Deckschicht vorzusehen.
Es ist auch möglich, die Beschichtung im Bereich der Kantenbrechung, speziell der Fase oder Abrundung, mit einer Prägung zu versehen. Dies kann in einem besonderen Arbeitsschritt oder auch gemeinsam mit der Prägung der Deckschicht erfolgen.
Der Bereich der Kantenbrechung, speziell der Fase oder Abrundung, kann vor dem Auftragen des Beschichtungsmaterials mit einem dekorativen Muster versehen, bevorzugt bedruckt, werden. In diesem Fall ist das Beschichtungsmittel zweckmäßig transparent. Auch eine solche Beschichtung kann mit einer Prägung versehen werden, die wiederum im Register zum Dekor der Kantenbrechung stehen kann.
Neben Träger- und ggf. Deckschicht kann das erfindungsgemäße Paneel weitere Schichten umfassen, beispielsweise eine besondere verschleißhemmende äußere Schicht, eine Dekorschicht, einen Gegenzug.
Das im erfindungsgemäßen Paneel vorhandene Beschichtungsmaterial umfasst haftungsfordernde Bestandteile, die eine Quellung des Kunststoffmaterials bewirken. Man kann auch Stoffe verwenden, welche Lösungsmittel für das Kunststoffmaterial sind, wenn deren Konzentration ausreichend niedrig eingestellt wird. Dann kommt es nicht zur Auflösung, sondern nur zur Quellung der obersten Bereiche in der Fläche der Kantenbrechung. Beispielsweise eignen sich für das Deckschichtmaterial Polyvinylchlorid aromatische Kohlenwasserstoffe wie Toluol oder Xylol, aliphatische Halogenkohlenwassersstoffe wie Trichlorethan, aromatische oder aliphatische heterozyklische Verbindungen mit Stickstoff und / oder Sauerstoff als Heteroatom, insbesondere zyklische Ether wie Dioxan, Tetrahydrofuran, Morpholin, Pyridin, Pyrimidin, Piperidin, Sulfolan, aliphatische Ester wie Butylacetat, Aceton, Dimethylsulfoxid (DMSO) und Glykole, wie beispielsweise Ethylenglykol, Diethylenglykol, Triethylenglykol, Diethylenglykolmonomethylester, Ethylenglykol-monobutylether oder 1,2-Propandiol. Man kann annehmen, dass die haftungsfordernde Wirkung auf einer teilweisen Verschweißung des gequollenen Kunststoffs mit dem aus dem Bindemittel des Beschichtungsmaterials gebildeten Polymerfilm und / oder auf einer durch das Anlösen bzw. Quellen der Kunststoffoberfläche vergrößerten Haftungsfläche beruht.
In einer Ausgestaltung der Erfindung kann der Lösungs- bzw. Quellmittelanteil im Beschichtungsmaterial im Moment des Auftrags auf die Trägerschicht in einem Bereich zwischen ≥1 Gew.-% bis ≤15 Gew.-%, vorzugsweise zwischen ≥2 Gew.-% bis ≤10 Gew.-%, besonders bevorzugt zwischen ≥4 Gew.-% bis ≤8 Gew.-%, insbesondere zwischen ≥5 Gew.-% bis ≤7 Gew.-% liegen.

Die Wirkung der haftungsfördernden und der Quellung bewirkenden Bestandteile kann durch Netzmittel verstärkt werden. Dabei ist das Beschichtungsmaterial vorzugsweise frei von Alkylphenolethoxylat (APEO)

Das Beschichtungsmaterial kann ein natürliches oder synthetisches hochmolekulares Bindemittel und ein dafür geeignetes Lösemittel enthalten. Bevorzugt werden jedoch Beschichtungsmaterialien, bei denen polymere Bindemittel in einer wässrigen Phase dispergiert sind. Solche Beschichtungsmaterialien sind im Allgemeinen bekannt und umfassen daneben noch weitere Zusätze wie Netzmittel, Pigmente, Farbstoffe, Füllmittel. Die Teilchen der Polymerdispersion haben dabei bevorzugt eine Größe im Bereich von 10 bis 1000 nm und bilden nach dem Verdampfen des Dispersionsmittels (Wasser) durch Koaleszenz einen Film. Der haftungs-bzw. quellungsfördernde Bestandteil muss in diesem Fall eine ausreichende Mischbarkeit mit der wässrigen Phase des Beschichtungsmaterials aufweisen.

Besonders bevorzugt als Bindemittel für die erfindungsgemäßen Beschichtungsmaterialien sind Copolymere aus Acrylsäureestern, insbesondere Methylacrylat, Ethylacrylat und Methylmethacrylat, sowie Styrol. Es hat sich gezeigt, dass ein solches Copolymer besonders resistent gegen Lösemittel- und Spannungsrisskorrosion ist.

Die Farbe des Beschichtungsmaterials kann durch Zusatz von Farbmitteln an die Farbe der Kunststoff- bzw. Deckschichtoberfläche oder des ggf. vorhandenen Dekors angepasst werden. Es sind auch Beschichtungsmaterialien verwendbar, die zumindest nach der Filmbildung transparent sind.

Ein geeignetes Beschichtungsmaterial wird von der Firma Heidelberger Lackfabrik Rentzsch GmbH & .Co. KG unter der Bezeichnung "Farblacksystem HD-Aquafix Fasenlack Color Art Nr. 7331" hergestellt.

Besonders vorteilhaft ist es, dem Beschichtungsmaterial schmutzabweisende Zusätze beizufügen. Da die Bereiche der Ausnehmungen an den Berührungslinien jeweils zweier Paneele im eingebauten Zustand etwas versenkt sind, werden sie bei der mechanischen Reinigung der mit den Paneelen bekleideten Fläche mit geringerer Intensität erfasst, sodass sich dort Schmutz ansammeln kann. Die schmutzabweisenden Zusätze können Teilchen hydrophober Materialien, wie fluoriertes Polymer (z.B. Tetrafluorpolyethylen), Wachse, wie beispielsweise Polyethylenwachs, Polypropylenwachs, Amidwachs, Carbaubawachs, Parafin oder hydrophobierte Kieselgele umfassen. Die Größe solcher Teilchen liegt vorteilhaft im Bereich von 10 nm bis 10 um. Da ein Zusatz von solchen hydrophoben Teilchen die Haftung der Beschichtung am Kunststoffträger und/oder an der Dekorschicht in unerwünschter Weise beeinträchtigen kann, ist es vorteilhaft und ausreichend, zunächst mindestens eine Schicht eines Beschichtungsmaterials ohne hydrophobe Teilchen aufzutragen und letztere nur einer zuletzt aufgetragenen äußeren Schicht beizufügen und so nur diese äußerste Schicht schmutzabweisen auszurüsten.

Dem jeweiligen Verwendungszweck angepasst können die Kunststoffe der Deckschicht mehr oder weniger Weichmacher enthalten, beispielsweise Phthalsäureester höherer Alkohole wie Dioctylphthalat. Die Menge des haftungs- bzw. quellungsfördenden Zusatzes im Beschichtungsmaterial kann sich nach dem Weichmacheranteil im Kunststoff der Deckschicht richten, wobei in der Regel bei höherem Weichmacheranteil weniger Zusatz erforderlich ist.

Das Auftragen des Beschichtungsmaterials auf den Bereich der Kantenbrechung, ggf. also die Fase, erfolgt vorteilhaft mittels speziell angepasster Verfahren, mit denen es gelingt, den schmalen, langgestreckten Bereich der Fase ohne Verschmutzung der Dekorfläche und der Seitenflächen des Paneels zu beschichten. Dies kann z. B. eine Sprühdüse sein, der eine Absaugung zugeordnet ist, welche Beschichtungsmaterial von den Flächen außerhalb der Fase fernhält. Möglich ist auch das Antragen des Beschichtungsmaterials mittels einer Walze bzw. eines Transferrads, ggf. mit strukturierter Oberfläche, welche die Fasenfläche berührt und an einer anderen Stelle ihres Umfangs in die Beschichtungslösung eintaucht. Schließlich ist auch eine Vorrichtung anwendbar, wie sie beispielsweise in DE 202005011120 U1 oder DD 156468 A3 beschrieben ist. Dabei berührt die Paneelkante lediglich einen Tropfen des Beschichtungsmaterials, der auf einem Beschichtungskopf durch fortwährendes Zuführen des Beschichtungsmaterials und Absaugen des Überschusses stabil gebildet wird, aber nicht den Beschichtungskopf selbst.

Bei einem Versuch zur Ausführung der Erfindung wurde eine 4,1 mm dicke Trägerplatte aus 40 % Polyvinylchlorid mit 23 % Weichmacher (Di-i-Nonylphthalat/i-Nonylbenzoat) und 24 % Kalziumkarbonat, Rest Blähmittel und weitere Hilfsstoffe, mit einer pigmentierten, 1,5 mm starken PVC-Folie kaschiert. Aus der Platte wurden rechteckige Paneele geschnitten, mit Verbindungselementen versehen und an den Längsseiten um 1 mm mit 45° abgefast. Der Fasenbereich wurde mit einem erfindungsgemäßen Beschichtungsmaterial mit einer dem DE 202005011120 U1entsprechenden Vorrichtung beschichtet. Die aufgetragene Schicht haftete auch dann hervorragend an der Fasenfläche, wenn das Paneel gebogen oder mit einer Reinigungsvorrichtung behandelt wurde.
In einem weiteren Beispiel wurde eine ca. 1,7 mm starke geschäumte PVC-Folie auf einen Träger aus einer 6,5 mm starken HDF-Platte laminiert und aus dem Verbund Paneele mit beschichteter Fase hergestellt. Auch hier haftete die Beschichtung des Fasenbereichs sehr gut.
Bei einem dritten Beispiel wurde eine oberflächlich mit Elektronenstrahlen vernetzte PVC-Folie (0,25 mm stark) auf den im ersten Beispiel verwendeten Träger laminiert. Obwohl in diesem Fall die Fase bis in die Trägerplatte reichte-, wurde hervorragende Haftung der Fasenbeschichtung beobachtet.
Hinsichtlich des Verfahrens wird die Aufgabe durch ein Verfahren gemäß Anspruch 14 gelöst.
Es wird somit ein Verfahren zur Herstellung eines Fußboden-, Decken- oder Wandbelag vorgeschlagen, aufweisend die im Anspruch 12 genannten Verfahrensschritte.

Der Bereich der Kantenbrechung wird mit einem Material beschichtet, welches als quellenden und /oder lösenden Bestandteil wenigstens eine Verbindung aus der Gruppe bestehend aus aromatische Kohlenwasserstoffe, aliphatischen Halogenkohlenwasserstoffen, heterozyklische Verbindungen mit Sauerstoff und/oder Stickstoff, Aceton, Dimethylsulfoxid (DMSO) Glykol und Glykolderivaten aufweist.

## Patentansprüche

1. Paneel als Fußboden-, Decken- oder Wandbelag mit mindestens einer Schicht aus einem Kunststoff, mit wenigstens an zwei Paneelkanten vorgesehenen komplementären Verriegelungsmitteln, die im verriegelten Zustand zweier Paneele zusammenwirken, und mit einer an mindestens einer Paneelkante angebrachten Kantenbrechung, wobei der Bereich der Kantenbrechung mit einem Material beschichtet ist, **dadurch gekennzeichnet, dass** das Paneel eine Trägerschicht und auf mindestens einer Seite der Trägerschicht eine Deckschicht aus Kunststoff aufweist und dass zur Förderung der Haftung der Beschichtung im Bereich der Kantenbrechung mit dem Kunststoff der Deckschicht und der weiteren von der Kantenbrechung erfassten Schichten, das Beschichtungsmaterial Bestandteile enthält, welche eine Quellung des Kunststoffs bewirken und /oder den Kunststoff lösen können, wobei die quellende und / oder lösenden Bestandteile wenigstens eine Verbindung aus der Gruppe bestehend aus aromatische Kohlenwasserstoffe, aliphatischen Halogenkohlenwasserstoffen, Aceton, Butylacetat, Dimethylsulfoxid (DMSO), Glykol und Glykolderivaten aufweisen.

2. Paneel nach Anspruch 1, **dadurch gekennzeichnet, dass** die Trägerschicht aus Kunststoff besteht.

3. Paneel nach Anspruch 1 oder 2, **dadurch gekennzeichnet, dass** der Kunststoff der Deckschicht ein Thermoplast ist, das an der Oberfläche vernetzt sein kann.

4. Paneel nach Anspruch 3, **dadurch gekennzeichnet, dass** der Thermoplast Polyvinylchlorid, ein Polyolefin, ein Polyamid, ein Polyurethane und/oder Polystyrol umfasst.

5. Paneel nach einem der vorangehenden Ansprüche, **dadurch gekennzeichnet, dass** die quellenden und /oder lösenden Bestandteile heterozyklische Verbindungen mit Sauerstoff und/oder Stickstoff aufweisen.

6. Paneel nach einem der vorangehenden Ansprüche, **dadurch gekennzeichnet, dass** das Beschichtungsmaterial eine wässrige Polymerdispersion umfasst.

7. Paneel nach Anspruch 6, **dadurch gekennzeichnet, dass** die Polymerdispersion ein Copolymer von Acrylsäureestern und Styrol umfasst.

8. Paneel nach Anspruch 6, **dadurch gekennzeichnet, dass** die Polymerdispersion eine Polymer der Acrylsäure, Methacrylsäure, Methacrylsäuremethylester oder ein Mischung dieser aufweist.

9. Paneel nach einem der vorangehenden Ansprüche, **dadurch gekennzeichnet, dass** das Beschichtungsmaterial schmutzabweisend ausgerüstet ist.

10. Paneel nach Anspruch 9, **dadurch gekennzeichnet, dass** das Beschichtungsmaterial Teilchen eines hydrophoben Materials enthält.

11. Paneel nach Anspruch 9 oder 10, **dadurch gekennzeichnet, dass** die Beschichtung im Bereich der Kantenbrechung mehrschichtig aufgebaut ist und nur die äußerste Schicht schmutzabweisend ausgerüstet ist.

12. Verfahren zur Herstellung eines Fußboden-, Decken- oder Wandbelag, aufweisend die Verfahrensschritte:
- Bereitstellen eines Paneels mit einem Trägerschicht mit auf mindestens einer Seite der Trägerschicht angeordneten Deckschicht aus einem Kunststoff und mit wenigstens an zwei Paneelkanten vorgesehenen komplementären Verriegelungsmitteln, die im verriegelten Zustand zweier Paneele zusammenwirken und mit einer an mindestens einer Paneelkante angebrachten Kantenbrechung;
- Beschichten zumindest des Bereichs der Kantenbrechung mit einem Material welches Bestandteile enthält, die eine Quellung des Kunststoffs bewirken und /oder den Kunststoff lösen können zur Förderung der Haftung der Beschichtung im Bereich der Kantenbrechung mit dem Kunststoff der Deckschicht und der weiteren von der Kantenbrechung erfassten Schichten, wobei
zumindest der Bereich der Kantenbrechung mit einem Material beschichtet wird, welches als quellenden und /oder lösenden Bestandteil wenigstens eine Verbindung aus der Gruppe bestehend aus aromatische Kohlenwasserstoffe, aliphatischen Halogenkohlenwasserstoffen, heterozyklische Verbindungen mit Sauerstoff und/oder Stickstoff, Aceton, Butylacetat, Dimethylsulfoxid (DMSO), Glykol und Glykolderivaten aufweist.

## Claims

1. Panel as a floor, ceiling or wall covering comprising at least one layer of a plastic material, complementary locking means which are provided at at least two panel edges and cooperate in the locked state of two panels and an edge chamfering mounted at at least one panel edge, wherein the area of the edge chamfering is coated with a material,
**characterized in that**
the panel comprises a carrier layer and a cover layer made of plastic material on at least one side of the carrier layer; and
**in that** for enhancing the adhesion of the coating in the area of the edge chamfering with the plastic material of the cover layer and the other layers encompassed by the edge chamfering, the coating material contains components which are able to cause a swelling of the plastic material and/or to dissolve the plastic material,
wherein the swelling and/or dissolving components include at least one compound of the group consisting of aromatic hydrocarbons, aliphatic halogenated hydrocarbons, acetone, butyl acetate, dimethyl sulfoxide (DMSO), glycol and glycol derivatives.

2. Panel according to claim 1, **characterized in that** the carrier layer consists of a plastic material.

3. Panel according to claim 1 or 2, **characterized in that** the plastic material of the cover layer is a thermoplastic material which may be crosslinked at the surface.

4. Panel according to claim 3, **characterized in that** the thermoplastic material comprises polyvinyl chloride, a polyolefin, a polyamide, a polyurethane and/or polystyrene.

5. Panel according to any one of the preceding claims, **characterized in that** the swelling and/or dissolving components include heterocyclic compounds with oxygen and/or nitrogen.

6. Panel according to any one of the preceding claims, **characterized in that** the coating material comprises an aqueous polymer dispersion.

7. Panel according to claim 6, **characterized in that** the polymer dispersion comprises a copolymer of acrylic acid esters and styrene.

8. Panel according to claim 6, **characterized in that** the polymer dispersion comprises a polymer of acrylic acid, methacrylic acid, methacrylic acid methyl ester or a mixture thereof.

9. Panel according to any one of the preceding claims, **characterized in that** the coating material is dirt-repellent.

10. Panel according to claim 9, **characterized in that** the coating material includes particles of a hydrophobic material.

11. Panel according to claim 9 or 10, **characterized in that** the coating is provided multi-layered in the area of the edge chamfering and only the outermost layer is dirt-repellent.

12. Method for producing a floor, ceiling or wall covering, comprising the steps:
providing a panel comprising a carrier layer having a cover layer of a plastic material disposed on at least one side of the carrier layer and complementary locking means provided at at least two panel edges and cooperating in the locked state of two panels and an edge chamfering mounted at at least one panel edge;
coating at least the area of the edge chamfering with a material which contains components which are able to cause a swelling of the plastic material and/or to dissolve the plastic material for enhancing the adhesion of the coating in the area of the edge chamfering with the plastic material of the cover layer and the other layers encompassed by the edge chamfering, wherein
at least the area of the edge chamfering is coated with a material which comprises as swelling and/or dissolving component at least one compound of the group consisting of aromatic hydrocarbons, aliphatic halohydrocarbons, heterocyclic compounds with oxygen and/or nitrogen, acetone, butyl acetate, dimethyl sulfoxide (DMSO), glycol and glycol derivatives.

## Revendications

1. Panneau servant de revêtement pour le sol, le plafond ou les murs, doté d'au moins une couche à base de matière plastique , avec au moins deux moyens de verrouillage complémentaires prévus sur deux arêtes de panneau qui agissent conjointement dans l'état verrouillé des deux panneaux, et avec une arête abattue rapportée sur au moins une arête de panneau, où la zone de l'arête abattue est revêtue d'un matériau, **caractérisé en ce que** le panneau présente une couche de support et une couche de recouvrement à base de matière plastique sur au moins une face de la couche de support et que le matériau de revêtement, pour l'amélioration de l'adhérence du revêtement dans la zone de l'arête abattue avec la matière plastique de la couche de recouvrement et des autres couches impliquées dans l'arête abattue, contient des composants, lesquels provoquent une gélification de la matière plastique et/ou peuvent dissoudre la matière plastique,
où les composants gélifiants et/ou dissolvants présentent au moins un composé du groupe constitué d'hydrocarbures aromatiques, d'hydrocarbures halogénés aliphatiques, de l'acétone, de l'acétate de butyle, du diméthylsulfoxyde (DMSO), du glycol et de dérivés de glycol.

2. Panneau selon la revendication 1, **caractérisé en ce que** la couche de support est constituée de matière plastique.

3. Panneau selon la revendication 1 ou 2, **caractérisé en ce que** la matière plastique de la couche de recouvrement est un thermoplastique qui peut être réticulé sur la surface.

4. Panneau selon la revendication 3, **caractérisé en ce que** le thermoplastique comprend du chlorure de polyvinyle, une polyoléfine, un polyamide, un polyuréthane et/ou du polystyrène.

5. Panneau selon l'une des revendications précédentes, **caractérisé en ce que** les composants gélifiants et/ou dissolvants présentent des composés hétérocycliques avec de l'oxygène et/ou de l'azote.

6. Panneau selon l'une des revendications précédentes, **caractérisé en ce que** le matériau de revêtement comprend une dispersion aqueuse de polymère.

7. Panneau selon la revendication 6, **caractérisé en ce que** la dispersion de polymère comprend un copolymère à base d'esters d'acide acrylique et de styrène.

8. Panneau selon la revendication 6, **caractérisé en ce que** la dispersion de polymère présente un polymère de l'acide acrylique, de l'acide méthacrylique, de l'ester méthyle de l'acide méthacrylique ou un mélange de ceux-ci.

9. Panneau selon l'une des revendications précédentes, **caractérisé en ce que** le matériau de revêtement est équipé d'un agent anti-salissures.

10. Panneau selon la revendication 9, **caractérisé en ce que** le matériau de revêtement contient des particules d'un matériau hydrophobe.

11. Panneau selon la revendication 9 ou 10, **caractérisé en ce que** le revêtement est conçu en plusieurs couches dans la zone de l'arête abattue et uniquement la couche extérieure est équipée d'un agent anti-salissures.

12. Procédé de fabrication d'un revêtement pour le sol, le plafond ou les murs, présentant les étapes de procédé :
- de mise au point d'un panneau doté d'une couche de support avec une couche de recouvrement à base de matière plastique disposée sur au moins une face de la couche de support et avec des moyens de verrouillage complémentaires prévus sur au moins deux arêtes de panneau qui agissent conjointement dans l'état verrouillé des deux panneaux et avec une arête abattue rapportée sur au moins une arête de panneau ;
- de revêtement au moins de la zone de l'arête abattue avec un matériau, lequel contient des composants qui provoquent une gélification de la matière plastique et/ou peuvent dissoudre la matière plastique, en vue de l'amélioration de l'adhérence du revêtement dans la zone de l'arête abattue avec la matière plastique de la couche de recouvrement et des autres couches impliquées dans l'arête abattue, où
au moins la zone de l'arête abattue est revêtue avec un matériau, lequel présente, en tant que composant gélifiant et/ou dissolvant, au moins un composé du groupe constitué d'hydrocarbures aromatiques, d'hydrocarbures halogénés aliphatiques, de composés hétérocycliques avec de l'oxygène et/ou de l'azote, de l'acétone, de l'acétate de butyle, du diméthylsulfoxyde (DMSO), du glycol et de dérivés de glycol.
